# EUROPEAN PATENT SPECIFICATION

(11) **EP 4 185 776 B1**
(45) Date of publication and mention of the grant of the patent: **01.10.2025**
(21) Application number: 21773211.4
(22) Date of filing: 24.08.2021
(51) Int. Cl.: F04D 17/12, F04D 29/053, F04D 29/26, F04D 29/62

(54) **COMPRESSOR ROTOR HAVING SEAL ASSEMBLY WITHIN HIRTH COUPLING**
VERDICHTERROTOR MIT DICHTUNGSANORDNUNG IN EINER HIRTH-KUPPLUNG
ROTOR DE COMPRESSEUR AYANT UN ENSEMBLE D'ÉTANCHÉITÉ AU SEIN D'UN ACCOUPLEMENT HIRTH

(30) Priority: 28.08.2020 US 202063071439 P
(43) Date of publication of application: 31.05.2023
(73) Proprietor: Siemens Energy Global GmbH & Co. KG, 81739 München (DE)
(72) Inventor: REIMANN, Martin, 45147 Essen (DE); MINY, Kevin, 45130 Essen (DE)
(74) Representative: HKW Intellectual Property PartG mbB
(86) International application number: PCT/US2021/047311
(87) International publication number: WO 2022/046745

(56) References cited:
- DE-A1- 2 844 746
- JP-A- 2006 138 255

## Description

### BACKGROUND

Disclosed embodiments relate generally to the field of turbomachinery, and, more particularly, to a rotor structure for a turbomachine, such as a compressor, and, even more particularly, to Hirth couplings in a compressor rotor.

Turbomachinery is used extensively in the oil and gas industry, such as for performing compression of a process fluid, conversion of thermal energy into mechanical energy, fluid liquefaction, etc. One example of such turbomachinery is a compressor, such as a centrifugal compressor.

DE 28 44 746 A1 discloses a rotor assembly for a compressor having a first set of rotor discs coupled to each other by friction and a second set of rotor discs coupled to each other by means of an axial toothing. Between two neighboring rotor discs coupled to each other by a toothing a sealing element is provided in a groove.

### BRIEF DESCRIPTION OF THE DRAWINGS

FIG. 1 illustrates a fragmentary, half-section isometric view of one non-limiting embodiment of a disclosed rotor structure, as may be used in industrial applications involving turbomachinery, such as without limitation, centrifugal compressors.
FIG. 2 illustrates a section isometric view of one non-limiting embodiment of a disclosed seal assembly. In this embodiment, the seal assembly involves a singular seal member disposed within a toothed meshing interface of a Hirth coupling axially joining for rotation two adjacent rotatable disks in a rotor.
FIG. 3 illustrates a cut section isometric view of one non-limiting embodiment of a circumferentially extending groove arranged in the toothed meshing interface of the Hirth coupling. The circumferentially extending groove may be configured with a dovetail geometry where an embodiment of the seal assembly may be disposed.
FIG. 4 illustrates a cross-section view of the embodiment described in the context of FIG. 3.
FIG. 5 illustrates a cross-sectional view of another non-limiting embodiment of circumferentially extending groove arranged in the toothed meshing interface of the Hirth coupling. In this embodiment, the circumferentially extending groove may be configured without a dovetail geometry where further embodiments of the seal assembly may be disposed.
FIG. 6 illustrates a cut section isometric view of the embodiment described in the context of FIG. 5.
FIG. 7 illustrates a section isometric view that shows yet another non-limiting embodiment of a seal assembly that may be used in disclosed embodiments.
FIG. 8 illustrates a section isometric view of still another non-limiting embodiment of a disclosed seal assembly. In this embodiment, the seal assembly involves a pair of seal members and a supporting ring disposed within the toothed meshing interface of the Hirth coupling.
FIG. 9 illustrates a cut section isometric view that shows one of the seal members of the pair of seal members of the embodiment described in the context of FIG. 8.
FIG. 10 illustrates a cut section isometric view of yet still another non-limiting embodiment that uses a singular seal member having a non-circular cross-section.

### DETAILED DESCRIPTION

As would be appreciated by those skilled in the art, turbomachinery, such as centrifugal compressors, may involve rotors of tie bolt construction (also referred to in the art as thru bolt or tie rod construction), where the tie bolt supports a plurality of impeller bodies and where adjacent impeller bodies may be interconnected to one another by way of elastically averaged coupling techniques, such as involving Hirth couplings or curvic couplings. These coupling types use different forms of face gear teeth (straight and curved, respectively) to form a robust coupling between two components. As used herein, the expression "Hirth couplings" is defined to include curvic couplings since disclosed embodiments may be advantageously applied regardless of the form of the face gear teeth.

These couplings and associated structures may be subject to greatly varying forces (e.g., centrifugal forces), such as from an initial rotor speed of zero revolutions per minute (RPM) to a maximum rotor speed, (e.g., as may involve tens of thousands of RPM). Additionally, these couplings and associated structures that, for example, may define interior cavities in the rotor may be exposed to contaminants and/or byproducts that may be present in process fluids processed by the compressor. If so exposed, such structures could be potentially affected in ways that could impact their long-term durability. By way of example, a combination of carbon dioxide (CO₂), liquid water and high-pressure levels can lead to the formation of carbonic acid (H₂CO₃), which is a chemical compound that can corrode, rust or pit certain steel components. Physical debris may also be present in the process fluids that if allowed to reach such structures could potentially affect their functionality and durability.

In view of the foregoing considerations, the present inventor has recognized that attaining consistent high performance and long-term durability in a centrifugal compressor may involve in disclosed embodiments appropriately disposing or otherwise securely holding within a respective Hirth coupling a respective seal assembly arranged to inhibit passage of process fluid being processed by the turbomachine (e.g., compressor), and thus ameliorating at least the issues discussed above.

Disclosed embodiments (involving a respective seal assembly within a respective Hirth coupling) provide a sealing structure inwardly located with respect to surfaces that define the contour of the rotor structure and thus practically independent from the flow contour about the turbomachine and further practically independent from the respective axial locations of the Hirth couplings. Moreover, the seal assembly can be securely held or otherwise restrained in place by one or more surfaces that define a circumferentially extending groove constructed in the toothed meshing interface of the Hirth coupling. The circumferentially extending groove accommodates the seal assembly within a given Hirth coupling and this containment arrangement for the seal assembly may be less susceptible to the high centrifugal forces that can develop at maximum rotor speed compared to, for example, sealing arrangements that may be disposed on radially outward surfaces of adjacent impeller bodies.

In the following detailed description, various specific details are set forth in order to provide a thorough understanding of such embodiments. However, those skilled in the art will understand that disclosed embodiments may be practiced without these specific details that the aspects of the present invention are not limited to the disclosed embodiments, and that aspects of the present invention may be practiced in a variety of alternative embodiments. In other instances, methods, procedures, and components, which would be well-understood by one skilled in the art have not been described in detail to avoid unnecessary and burdensome explanation.

Furthermore, various operations may be described as multiple discrete steps performed in a manner that is helpful for understanding embodiments of the present invention. However, the order of description should not be construed as to imply that these operations need be performed in the order they are presented, nor that they are even order dependent, unless otherwise indicated. Moreover, repeated usage of the phrase "in one embodiment" does not necessarily refer to the same embodiment, although it may. It is noted that disclosed embodiments need not be construed as mutually exclusive embodiments, since aspects of such disclosed embodiments may be appropriately combined by one skilled in the art depending on the needs of a given application.

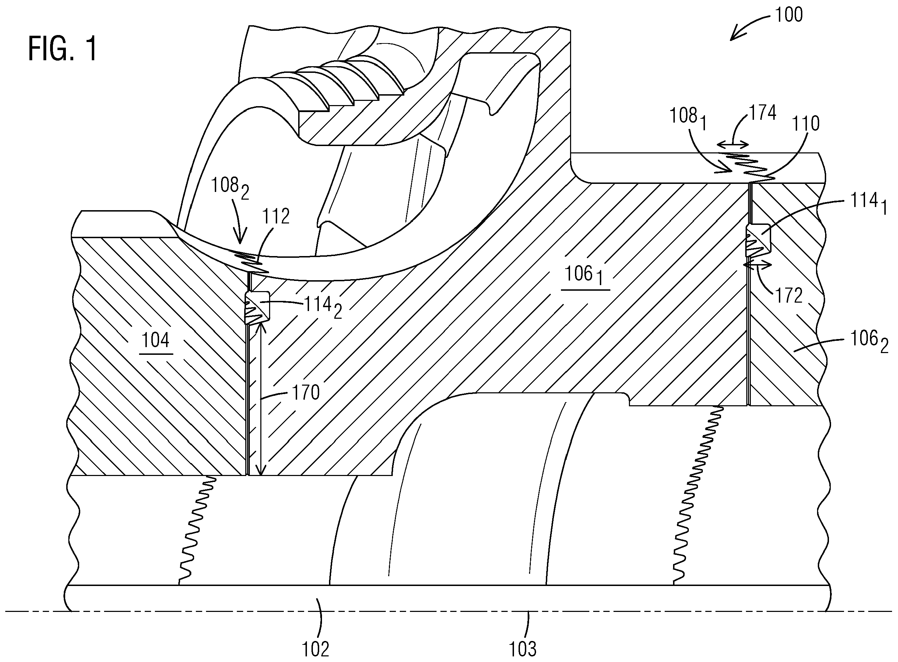

FIG. 1 illustrates a fragmentary, half-section isometric view of one non-limiting embodiment of a disclosed rotor assembly 100, as may be used in industrial applications involving turbomachinery, such as without limitation, compressors (e.g., centrifugal compressors, etc.).

In one disclosed embodiment, a tie bolt 102 extends along a rotor axis 103 between a first end and a second end of the tie bolt 102. A rotor shaft 104 may be fixed to one end of tie bolt 102. A second rotor shaft (not shown) may be fixed to the other end of the tie bolt The rotor shafts may be referred to in the art as stub shafts. It will be appreciated that in certain embodiments more than two rotor shafts may be involved.

A plurality of impeller bodies may be disposed between the rotor shafts and supported by tie bolt 102. For simplicity of illustration, a fragmentary view of a first impeller body 106₁ and just an axial portion of a second impeller body 106₂ are illustrated in FIG. 1. By way of example, a back side of impeller body 106₁ is mechanically coupled to an inlet side of impeller body 106₂ for rotation about the rotor axis by way of a Hirth coupling 108₁. In the illustrated embodiment, an additional Hirth coupling 108₂ may be used to mechanically couple the inlet side of impeller body 106₁ with adjacent rotor shaft 104. It will be appreciated that the foregoing arrangement of impeller bodies and Hirth couplings is just one example and should not be construed in a limiting sense.

As would be appreciated by one skilled in the art, Hirth coupling 108₁ defines a circumferential toothed meshing interface 110 between first impeller body 106₁ and second impeller body 106₂. Similarly, Hirth coupling 108₂ defines a circumferential toothed meshing interface 112 between first impeller body 106₁ and adjacent rotor shaft 104. A circumferentially extending groove 114₁ (e.g., extending 360 degrees about rotor axis 103) may be arranged in toothed meshing interface 110 of Hirth coupling 108₁ and a further circumferentially extending groove 114₂ may be arranged in toothed meshing interface 112 of Hirth coupling 108₂. It will be appreciated that disclosed embodiments may be applied regardless of whether the Hirth couplings form integral structures with the impeller bodies or whether the Hirth couplings are discrete elements individually separable from the impeller bodies.

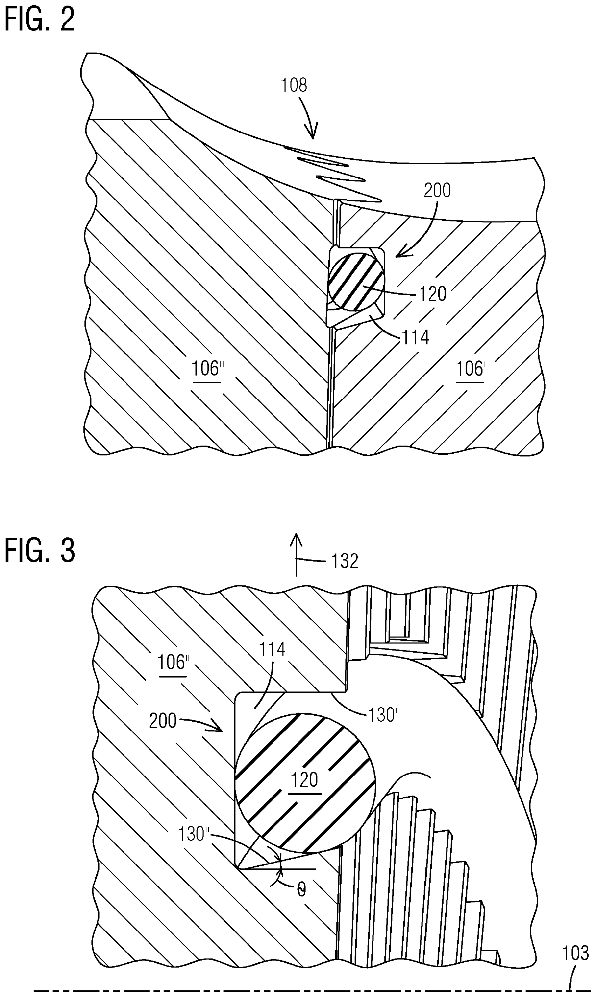

As indicated in FIG. 1, the axial depth of each groove (schematically represented by twin-headed arrow 172, just shown in connection with groove 114₁) should be deeper than the teeth height (schematically represented by twin-headed arrow 174, also just shown in connection with groove 114₁) in toothed meshing interface 110, for example. That is, the axial depth of each groove should be sufficiently sized to allow spanning the teeth height 174 of the respective toothed meshing interface. This arrangement permits achieving an appropriate sealing effect by one or more seal members of a seal assembly 200, as illustrated and described below in the context of the seal assembly embodiments shown in FIGs. 2 through 9.

In the embodiment shown in FIG. 2, seal assembly 200 involves a singular seal member 120 (e.g., an O-ring having a circular cross-section, that, for example, may be made of an elastomer or similar material) disposed in the circumferentially extending groove 114 to inhibit passage through the toothed meshing interface of Hirth coupling 108 of process fluid being processed by the compressor. According to the invention, the circumferentially extending groove 114 is positioned radially closer to an outer diameter of the Hirth coupling than to an inner diameter of the Hirth coupling. This increases the radial distance (schematically represented by arrow 170 in FIG. 1) of the Hirth coupling, which would not be subject to the process fluid. It will be appreciated that seal member/s need not be limited to any specific sealing modality. For instance, seal member/s may be selected from any of various sealing modalities that may be appropriately selected based on the needs of a given application. Non-limiting examples may involve a C-shaped metallic seal member, an E-shaped metallic member, a leaf seal member, a metallic cloth seal member, a multi-lobe seal member, a U-shaped metallic member and other sealing modalities that should now become readily apparent to one skilled in the art.

As shown in FIG. 2, seal member 120, within Hirth coupling 108, is disposed between a first impeller body 106' and a second rotor component 106". In one non-limiting embodiment, seal member 120 of seal assembly 200 may be a continuous, one-piece seal member that extends along the entire circumferentially extending groove 114. In general, second rotor component 106" may be any given rotor component, such as a second impeller body, a rotor shaft, or a balance piston, adjacent to first impeller body 106' and mechanically connected to first impeller body 106' for rotation about the rotor axis by way of a Hirth coupling, as discussed above in the context of FIG. 1. Accordingly, the description below may be similarly applicable regardless of whether the respective rotor components 106 that are connected by a given Hirth coupling may be impeller body to impeller body, rotor shaft to impeller body, impeller body to balance piston, rotor shaft to balance piston, rotor shaft to rotor shaft, etc. In general, disclosed embodiments may be applied to Hirth couplings arranged to mechanically couple adjacent rotatable disks in the rotor of a turbomachine.

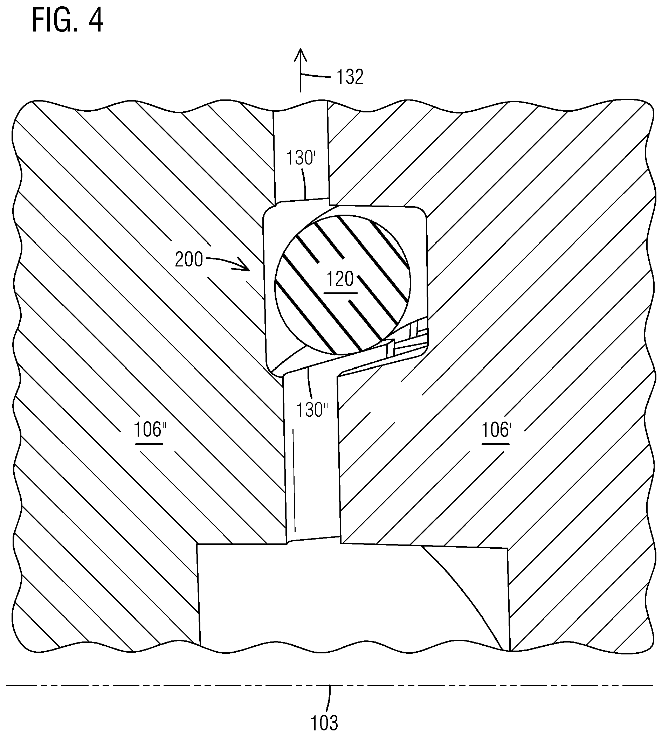

As may be better appreciated in FIGs. 3 and 4, in one non-limiting embodiment, the circumferentially extending groove 114 may be at least in part defined by two non-parallel sides 130' and 130" positioned in a facing relationship along a radial direction, schematically represented by arrow 132. In one non-limiting embodiment, the two non-parallel sides 130' and 130" may be arranged so that circumferentially extending groove 114 defines a dovetail groove. As used herein, it is contemplated that the dovetail groove may be a full dovetail groove where mutually opposite sides of the groove have oblique angles, or may be a half dovetail groove, where just one of mutually opposite sides of the groove has an oblique angle, as illustrated in FIGs. 3 and 4. For example, in one non-limiting embodiment, first side 130' may have a first angle parallel to rotor axis 103 and the second side 130" may have a second angle (e.g., labelled Θ) that is oblique with respect to the rotor axis 103. In this example, first side 130' and the second side 130" would define a half-dovetail groove. Although, the figures illustrate the second side 130" as having the oblique angle, it will be appreciated than in certain applications first side 130' (relatively closer to the outer diameter of the Hirth coupling) could be the side having the oblique angle.

For simplicity of illustration, FIG. 3 illustrates just one of the Hirth axial faces of the toothed meshing interface defined by Hirth coupling 108. FIG. 4 illustrates both Hirth axial faces of the toothed meshing interface defined by Hirth coupling 108 prior to full axial engagement of first impeller body 106' and second rotor component 106" by way of Hirth coupling 108. Without limitation, the dovetail geometry for the circumferentially extending groove 114 may be desirable in embodiments, where the seal member 120 may involve an O-ring having a circular cross-section, that, for example, may be made of an elastomer or similar material. The dovetail geometry, whether full or half-dovetail, may be effective to, for example, facilitate assembly of a seal member having a circular cross-section into the circumferentially extending groove 114. Moreover, the dovetail geometry may be further conducive to reduce the possibility of sharp edges of the toothed meshing interface piercing into the seal member.

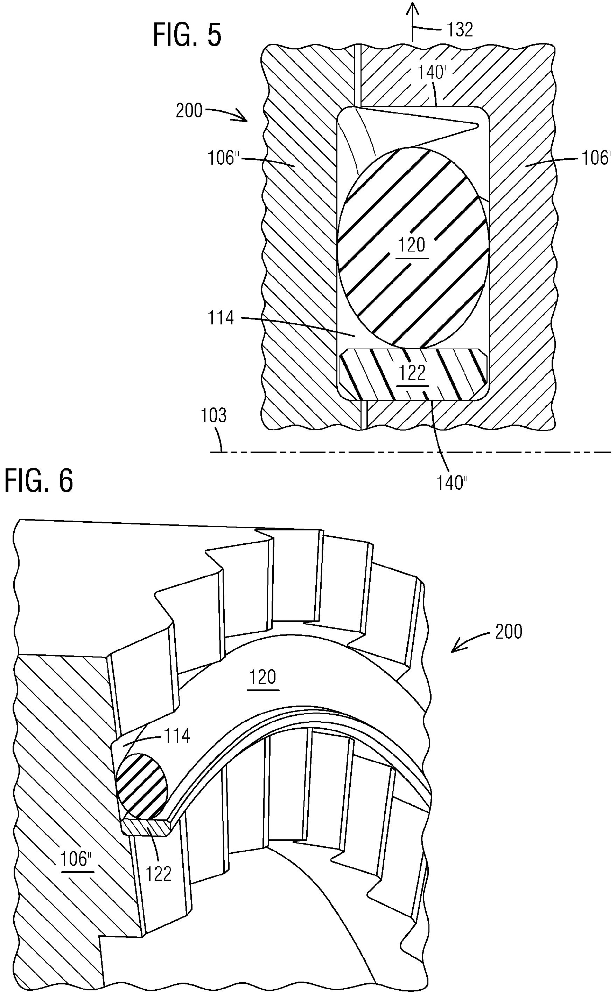

As may be better appreciated in FIG. 5, in one non-limiting embodiment, circumferentially extending groove 114 may be at least in part defined by two parallel sides 140', 140" mutually facing one another along the radial direction, schematically represented by arrow 132. That is, in this embodiment circumferentially extending groove 114 does not include the dovetail features described above and may receive a seal member 120, such as may comprise an O-ring and may further receive a backup seal member 122 that has a non-circular cross section and has one side disposed on one of the two parallel sides 140', 140". By way of example, backup seal member 122 may be designed to avoid the possibility of extrusion of portions of seal member 120, such as due to pressure differential, through gaps that may be present in the toothed meshing interface of Hirth coupling 108. Non-limiting examples of materials for backup seal member 122 may be metallic materials, such as stainless steel or metal alloy materials, such as nickel- or cobalt-alloys; polytetrafluoroethylene (PTFE), and other high-performance polymers. FIG. 6 illustrates a cut section isometric view of the embodiment described above in the context of FIG. 5.

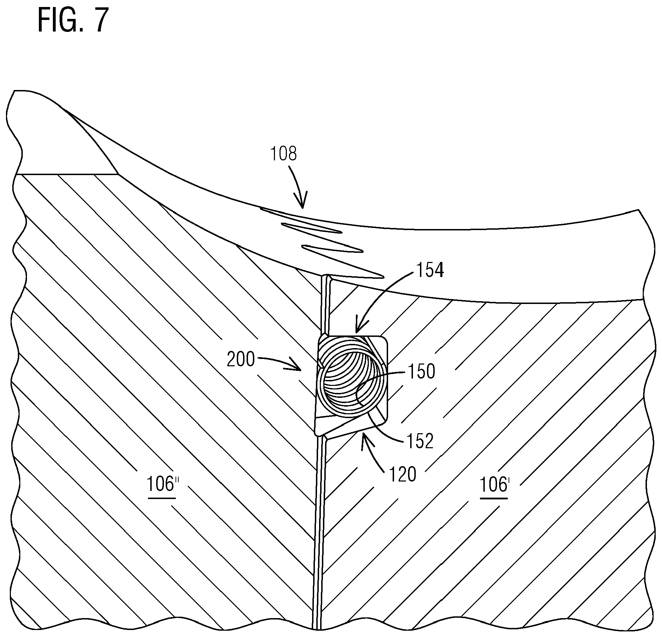

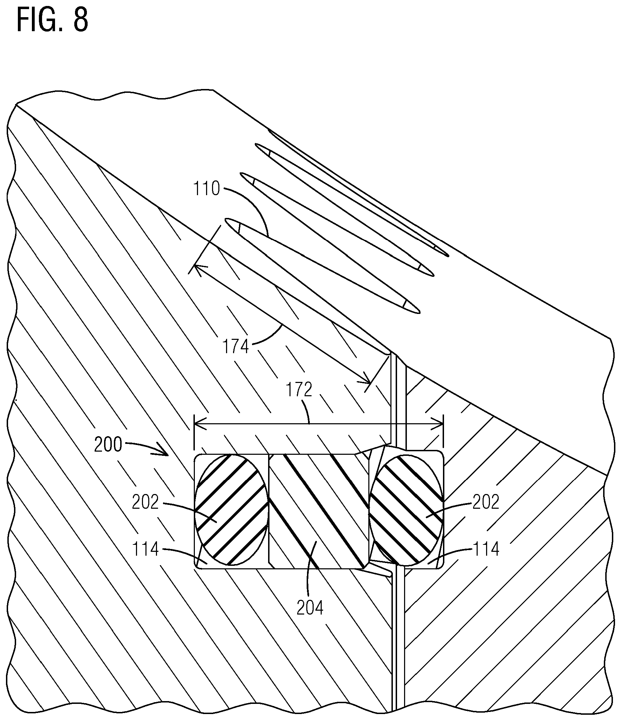

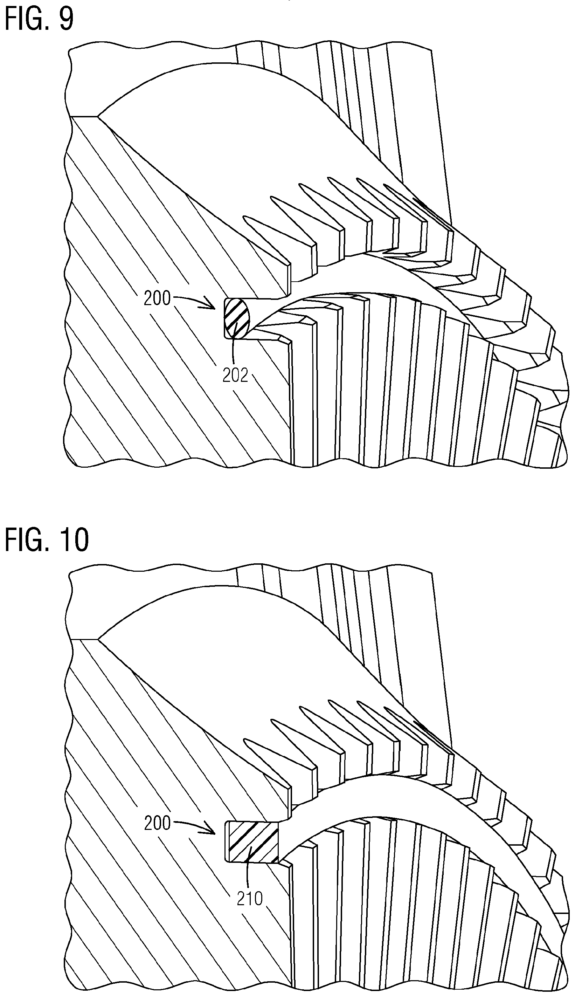

FIG. 7 illustrates a section isometric view that shows yet another embodiment of seal assembly 200 formed by a seal member 120 comprising a spring energized seal assembly that, for example, may be used in disclosed embodiments where, for example, elastomeric seals may not meet the frictional, temperature, pressure, or chemical-resistance requirements of a given application. Without limitation, seal member 120 in this embodiment may be formed by a spring energized seal jacket 150 disposed within a metallic support 152, such as C-shaped, U-shaped, etc. The seal jacket, without limitation, may be constructed from PTFE, and other high-performance polymer composite spring-energized seals. In one non-limiting embodiment, an open portion 154 of the metallic support 152 may be in fluid communication with a region comprising a relatively higher pressure. This embodiment may be used in any of the foregoing embodiments described above in the context of FIGs 1-6 and described below in the context of FIGs 8 and 9.

FIG. 8 illustrates a section isometric view of still another non-limiting embodiment of a disclosed seal assembly 200. In this embodiment, seal assembly 200 is formed by a pair of seal members 202, such as respective O-rings (e.g., O-rings each having a respective circular cross-section, that, for example, may be made of an elastomer or similar material), and a support ring 204 interposed between the pair of seal members 202. In one non-limiting embodiment, support ring 204 may have a non-circular cross-section, such as rectangular shaped. That is, support ring 204 defines a pair of mutually opposed planar surfaces, each abutting against a respective O-ring of the pair of O-rings 202 so that each O-ring is disposed between a lateral surface of groove 114 and a respective one of the pair of mutually opposed planar surfaces.

Each of the foregoing elements of seal assembly 200 is disposed within toothed meshing interface 110 of the Hirth coupling. It will be appreciated that in this embodiment, the axial depth 172 of groove 114 may be configured with a sufficient reach (e.g., sufficient span) to clear the teeth height 174 of toothed meshing interface 110. This arrangement is effective to avoid the possibility of sharp edges of the toothed meshing interface 110 piercing into seal members 202 without involvement of an arrangement involving non-parallel sides as described above (e.g., full dovetail, half-dovetail, etc.). Furthermore, for a given sealing functionality, the respective cross-sections of the pair of seal members 202 may each be reduced compared to the cross-section size of a singular seal member (e.g., O-ring), and this allows reducing the radial space taken by groove 114, which offers flexibility to the designer in applications where the available radial space of the groove may be at a premium. Non-limiting examples of materials for support ring 204 may be metallic materials, such as stainless steel or metal alloy materials, such as nickel- or cobalt-alloys; polytetrafluoroethylene (PTFE), and other high-performance polymers.

FIG. 9 illustrates a cut section isometric view that for simplicity of illustration shows just one of the seal members of the pair of seal members 202 of the embodiment described in the context of FIG. 8. It is contemplated that in certain embodiments, seal assembly 200, as shown in FIG. 10, may be formed by a singular element, such as a ring 210 having a non-circular cross-section, (e.g., a rectangular-shaped cross-section) made from a relatively rigid material compared to an elastomer. Non-limiting examples of materials for non-circular ring 210 may be metallic materials, such as stainless steel or metal alloy materials, such as nickel-based or cobalt-based alloys; polytetrafluoroethylene (PTFE), and other high-performance polymers.

In operation, disclosed embodiments permit securely retaining within a respective Hirth coupling a respective seal assembly arranged to inhibit passage of process fluid being processed by the compressor. In operation, disclosed embodiments provide a sealing structure practically independent from the flow contour about the turbomachine and further practically independent from the respective axial locations of the Hirth couplings, which can provide substantial design flexibility to a designer of turbomachine rotors.

## Claims

1. A compressor rotor (100) comprising:
a tie bolt (102) that extends along a rotor axis (103);
a first rotor shaft (104) coupled to the tie bolt (102);
a second rotor shaft coupled to the tie bolt (102);
a first impeller body (106₁) disposed between the first rotor shaft (104) and the second rotor shaft;
a second impeller body (106₂) disposed between the first rotor shaft (104) and the second rotor shaft;
a Hirth coupling (108₁) positioned to axially couple the first impeller body (106₁) and the second impeller body (106₂) for rotation about the rotor axis, the Hirth coupling (108₁) defining a toothed meshing interface (110) between the first impeller body (106₁) and the second impeller body (106₂);
a circumferentially extending groove (114₁) arranged in the toothed meshing interface (110) of the Hirth coupling (108₁); and
a seal assembly (200) disposed in the circumferentially extending groove (114₁) to inhibit passage through the toothed meshing interface (110) of process fluid being processed by the compressor,
**characterised in that**
the circumferentially extending groove (114₁) is positioned radially closer to an outer diameter of the Hirth coupling (108₁) than to an inner diameter of the Hirth coupling (108₁).

2. The compressor rotor of claim 1, wherein the circumferentially extending groove (114₁) extends 360 degrees about the rotor axis (103), and the seal assembly (200) is formed by at least one continuous seal member (120) that extends along the entire circumferentially extending groove (114₁).

3. The compressor rotor of claim 1, wherein the circumferentially extending groove (114₁) is at least in part defined by two parallel sides (140', 140") mutually facing one another along a radial direction.

4. The compressor rotor of claim 1, wherein the circumferentially extending groove (114₁) is at least in part defined by two non-parallel sides (130',130") positioned in a facing relationship along a radial direction.

5. The compressor rotor of claim 1, wherein the circumferentially extending groove (114₁) is at least in part defined by a first side (130') and a second side (130") positioned in a facing relationship along a radial direction, the first side (130') having a first angle parallel to the rotor axis (103) and the second side (103'') having a second angle (Θ) that is oblique with respect to the rotor axis (103).

6. The compressor rotor of claim 2, wherein the at least one seal member (120) is an O-ring made from an elastomer.

7. The compressor rotor of claim 2, wherein the at least one seal member (120) is selected from the group consisting of a U-shaped metallic seal member, a C-shaped metallic seal member, an-E-shaped seal member, a leaf seal member, and a metallic cloth seal member.

8. The compressor rotor of claim 2, wherein the at least one seal member (120) comprises a spring energized seal assembly including a seal jacket (150) disposed in a metallic support (152).

9. The compressor rotor of claim 2, wherein the at least one seal member (120) comprises an O-ring, and the seal assembly (200) further comprises a backup seal member (122) disposed in the circumferentially extending groove (114₁).

10. The compressor rotor of claim 3 or claim 4, wherein the at least one seal member (120) comprises an O-ring made from an elastomer, and the seal assembly (200) further comprises a backup seal member (122) disposed in the circumferentially extending groove (114₁), and
wherein the backup seal member (122) is metallic and has a non-circular cross section having one side disposed on one of the two parallel sides.

11. The compressor rotor of claim 3 or claim 4, wherein the at least one seal member (120) is selected from the group consisting of a U-shaped metallic seal member, a C-shaped metallic seal member, an-E-shaped seal member, a leaf seal member, and a metallic cloth seal member.

12. The compressor rotor of claim 3 or claim 4, wherein the at least one seal member (120) comprises a spring energized seal assembly including a seal jacket (150) disposed in a metallic support (152).

13. The compressor rotor of claim 1, wherein the circumferentially extending groove (114₁) has an axial depth (172) that spans teeth height (174) of the toothed meshing interface (110).

14. The compressor rotor of claim 1, wherein the seal assembly (200) is formed by a pair of O-rings (202), and the seal assembly further comprises a support ring (204) interposed between the pair of O-rings (202) in the circumferentially extending groove (114₁),
wherein the circumferentially extending groove (114₁) extends 360 degrees about the rotor axis (103), and each of the O-rings (202) of the pair of O-rings (202) and the support ring (204) extends continuously along the entire circumferentially extending groove (114₁).

15. The compressor rotor of claim 14, wherein each of the O-rings (202) of the pair of O-rings (202) is formed by an elastomer and the support ring (204) is formed by one of a polymer, a metal and a metal alloy.

## Patentansprüche

1. Verdichterrotor (100), umfassend:
einen Zugbolzen (102), der sich entlang einer Rotorachse (103) erstreckt,
eine an den Zugbolzen (102) gekoppelte erste Rotorwelle (104),
eine an den Zugbolzen (102) gekoppelte zweite Rotorwelle,
einen zwischen der ersten Rotorwelle (104) und der zweiten Rotorwelle angeordneten zweiten Laufradkörper (106₁),
einen zwischen der ersten Rotorwelle (104) und der zweiten Rotorwelle angeordneten zweiten Laufradkörper (106₂),
eine Hirth-Verzahnung (108₁), die dazu positioniert ist, den ersten Laufradkörper (106₁) und den zweiten Laufradkörper (106₂) zur Drehung um die Rotorachse axial zu koppeln, wobei die Hirth-Verzahnung (108₁) eine gezahnte Eingriffsschnittstelle (110) zwischen dem ersten Laufradkörper (106₁) und dem zweiten Laufradkörper (106₂) definiert,
eine sich in Umfangsrichtung erstreckende Nut (114₁), die in der gezahnten Eingriffsschnittstelle (110) der Hirth-Verzahnung (108₁) angeordnet ist, und
eine Dichtungsbaugruppe (200), die in der sich in Umfangsrichtung erstreckenden Nut (114₁) angeordnet ist, um den Durchgang von Prozessfluid, das von dem Verdichter verarbeitet wird, durch die gezahnte Eingriffsschnittstelle (110) zu verhindern,
**dadurch gekennzeichnet, dass**
die sich in Umfangsrichtung erstreckende Nut (114₁) radial näher an einem Außendurchmesser der Hirth-Verzahnung (108₁) positioniert ist als an einem Innendurchmesser der Hirth-Verzahnung (108₁).

2. Verdichterrotor nach Anspruch 1, wobei sich die sich in Umfangsrichtung erstreckende Nut (114₁) um 360 Grad um die Rotorachse (103) erstreckt und die Dichtungsbaugruppe (200) durch mindestens ein durchgehendes Dichtungsglied (120) gebildet ist, das sich entlang der gesamten sich in Umfangsrichtung erstreckenden Nut (114₁) erstreckt.

3. Verdichterrotor nach Anspruch 1, wobei die sich in Umfangsrichtung erstreckende Nut (114₁) mindestens teilweise durch zwei parallele Seiten (140', 140") definiert ist, die einander entlang einer radialen Richtung zugewandt sind.

4. Verdichterrotor nach Anspruch 1, wobei die sich in Umfangsrichtung erstreckende Nut (114₁) mindestens teilweise durch zwei nicht parallele Seiten (130', 130") definiert ist, die in einer gegenüberliegenden Beziehung entlang einer radialen Richtung positioniert sind.

5. Verdichterrotor nach Anspruch **1,** wobei die sich in Umfangsrichtung erstreckende Nut (114₁) mindestens teilweise durch eine erste Seite (130') und eine zweite Seite (130") definiert ist, die in einer gegenüberliegenden Beziehung entlang einer radialen Richtung positioniert sind, wobei die erste Seite (130') einen ersten Winkel parallel zu der Rotorachse (103) aufweist und die zweite Seite (103") einen zweiten Winkel (θ) aufweist, der in Bezug auf die Rotorachse (103) schräg ist.

6. Verdichterrotor nach Anspruch 2, wobei das mindestens eine Dichtungsglied (120) ein O-Ring ist, der aus einem Elastomer hergestellt ist.

7. Verdichterrotor nach Anspruch 2, wobei das mindestens eine Dichtungsglied (120) aus der Gruppe ausgewählt ist, die aus einem U-förmigen metallischen Dichtungsglied, einem C-förmigen metallischen Dichtungsglied, einem E-förmigen Dichtungsglied, einem Blattdichtungsglied und einem metallischen Gewebedichtungsglied besteht.

8. Verdichterrotor nach Anspruch 2, wobei das mindestens eine Dichtungsglied (120) eine federgestützte Dichtungsbaugruppe umfasst, die einen in einer metallischen Stütze (152) angeordneten Dichtungsmantel (150) umfasst.

9. Verdichterrotor nach Anspruch 2, wobei das mindestens eine Dichtungsglied (120) einen O-Ring umfasst und die Dichtungsbaugruppe (200) ferner ein Backup-Dichtungsglied (122) umfasst, das in der sich in Umfangsrichtung erstreckenden Nut (114₁) angeordnet ist.

10. Verdichterrotor nach Anspruch 3 oder Anspruch 4, wobei das mindestens eine Dichtungsglied (120) einen aus einem Elastomer hergestellten O-Ring umfasst und die Dichtungsbaugruppe (200) ferner ein Backup-Dichtungsglied (122) umfasst, das in der sich in Umfangsrichtung erstreckenden Nut (114₁) angeordnet ist,
wobei das Backup-Dichtungsglied (122) metallisch ist und einen nicht kreisförmigen Querschnitt aufweist, wobei eine Seite an einer der zwei parallelen Seiten angeordnet ist.

11. Verdichterrotor nach Anspruch 3 oder Anspruch 4, wobei das mindestens eine Dichtungsglied (120) aus der Gruppe ausgewählt ist, die aus einem U-förmigen metallischen Dichtungsglied, einem C-förmigen metallischen Dichtungsglied, einem E-förmigen Dichtungsglied, einem Blattdichtungsglied und einem metallischen Gewebedichtungsglied besteht.

12. Verdichterrotor nach Anspruch 3 oder Anspruch 4, wobei das mindestens eine Dichtungsglied (120) eine federgestützte Dichtungsbaugruppe umfasst, die einen in einer metallischen Stütze (152) angeordneten Dichtungsmantel (150) umfasst.

13. Verdichterrotor nach Anspruch 1, wobei die sich in Umfangsrichtung erstreckende Nut (114₁) eine axiale Tiefe (172) aufweist, die die Zahnhöhe (174) der gezahnten Eingriffsschnittstelle (110) überspannt.

14. Verdichterrotor nach Anspruch 1, wobei die Dichtungsbaugruppe (200) durch ein Paar O-Ringe (202) gebildet ist und die Dichtungsbaugruppe ferner einen Stützring (204) umfasst, der zwischen dem Paar O-Ringe (202) in der sich in Umfangsrichtung erstreckenden Nut (114₁) angeordnet ist,
wobei sich die sich in Umfangsrichtung erstreckende Nut (114₁) um 360 Grad um die Rotorachse (103) erstreckt und sich jeder der O-Ringe (202) des Paars O-Ringe (202) und der Stützring (204) durchgehend entlang der gesamten sich in Umfangsrichtung erstreckenden Nut (114₁) erstrecken.

15. Verdichterrotor nach Anspruch 14, wobei jeder der O-Ringe (202) des Paars O-Ringe (202) durch ein Elastomer gebildet ist und der Stützring (204) durch ein Polymer oder ein Metall oder eine Metalllegierung gebildet ist.

## Revendications

1. Rotor de compresseur (100) comprenant :
un boulon d'assemblage (102) qui s'étend le long d'un axe de rotor (103) ;
un premier arbre de rotor (104) accouplé au boulon d'assemblage (102) ;
un second arbre de rotor accouplé au boulon d'assemblage (102) ;
un premier corps de roue (106₁) disposé entre le premier arbre de rotor (104) et le second arbre de rotor ;
un second corps de roue (106₂) disposé entre le premier arbre de rotor (104) et le second arbre de rotor ;
un accouplement Hirth (108₁) positionné pour accoupler axialement le premier corps de roue (106₁) et le second corps de roue (106₂) pour une rotation autour de l'axe du rotor, l'accouplement Hirth (108₁) définissant une interface d'engrènement dentée (110) entre le premier corps de roue (106₁) et le second corps de roue (106₂) ;
une rainure s'étendant circonférentiellement (114₁) disposée dans l'interface d'engrènement dentée (110) de l'accouplement Hirth (108₁) ; et
un ensemble d'étanchéité (200) disposé dans la rainure s'étendant circonférentiellement (114₁) pour empêcher le passage à travers l'interface d'engrènement dentée (110) du fluide de traitement traité par le compresseur,
**caractérisé en ce que**
la rainure s'étendant circonférentiellement (114₁) est positionnée radialement plus près d'un diamètre extérieur du raccord Hirth (108₁) que d'un diamètre intérieur du raccord Hirth (108₁).

2. Rotor de compresseur selon la revendication 1, dans lequel la rainure s'étendant circonférentiellement (114₁) s'étend sur 360 degrés autour de l'axe de rotor (103), et l'ensemble d'étanchéité (200) est formé par au moins un élément d'étanchéité continu (120) qui s'étend le long de toute la rainure s'étendant circonférentiellement (114₁).

3. Rotor de compresseur selon la revendication **1,** dans lequel la rainure s'étendant circonférentiellement (114₁) est au moins en partie définie par deux côtés parallèles (140', 140") se faisant mutuellement face le long d'une direction radiale.

4. Rotor de compresseur selon la revendication **1,** dans lequel la rainure s'étendant circonférentiellement (114₁) est au moins en partie définie par deux côtés non parallèles (130', 130") positionnés en face à face le long d'une direction radiale.

5. Rotor de compresseur selon la revendication **1,** dans lequel la rainure s'étendant circonférentiellement (114₁) est au moins en partie définie par un premier côté (130') et un second côté (130") positionnés en face à face le long d'une direction radiale, le premier côté (130') ayant un premier angle parallèle à l'axe de rotor (103) et le second côté (103") ayant un second angle (θ) qui est oblique par rapport à l'axe de rotor (103).

6. Rotor de compresseur selon la revendication 2, dans lequel le ou les éléments d'étanchéité (120) sont des joints toriques fabriqués à partir d'un élastomère.

7. Rotor de compresseur selon la revendication 2, dans lequel le ou les éléments d'étanchéité (120) sont choisis dans le groupe constitué d'un élément d'étanchéité métallique en forme de U, d'un élément d'étanchéité métallique en forme de C, d'un élément d'étanchéité en forme de E, d'un élément d'étanchéité en feuille et d'un élément d'étanchéité en toile métallique.

8. Rotor de compresseur selon la revendication 2, dans lequel le ou les éléments d'étanchéité (120) comprennent un ensemble d'étanchéité actionné par ressort comprenant une chemise d'étanchéité (150) disposée dans un support métallique (152).

9. Rotor de compresseur selon la revendication 2, dans lequel le ou les éléments d'étanchéité (120) comprennent un joint torique, et l'ensemble d'étanchéité (200) comprend en outre un élément d'étanchéité de renfort (122) disposé dans la rainure s'étendant circonférentiellement (114₁).

10. Rotor de compresseur selon la revendication 3 ou la revendication 4, dans lequel le ou les éléments d'étanchéité (120) comprennent un joint torique fabriqué à partir d'un élastomère, et l'ensemble d'étanchéité (200) comprend en outre un élément d'étanchéité de renfort (122) disposé dans la rainure s'étendant circonférentiellement (114₁), et
dans lequel l'élément d'étanchéité de renfort (122) est métallique et présente une section transversale non circulaire dont un côté est disposé sur l'un des deux côtés parallèles.

11. Rotor de compresseur selon la revendication 3 ou la revendication 4, dans lequel le ou les éléments d'étanchéité (120) sont sélectionnés parmi le groupe constitué d'un élément d'étanchéité métallique en forme de U, d'un élément d'étanchéité métallique en forme de C, d'un élément d'étanchéité en forme de E, d'un élément d'étanchéité en feuille et d'un élément d'étanchéité en toile métallique.

12. Rotor de compresseur selon la revendication 3 ou la revendication 4, dans lequel le ou les éléments d'étanchéité (120) comprennent un ensemble d'étanchéité actionné par ressort comprenant une chemise d'étanchéité (150) disposée dans un support métallique (152).

13. Rotor de compresseur selon la revendication **1,** dans lequel la rainure s'étendant circonférentiellement (114₁) a une profondeur axiale (172) qui s'étend sur la hauteur des dents (174) de l'interface d'engrènement dentée (110).

14. Rotor de compresseur selon la revendication **1,** dans lequel l'ensemble d'étanchéité (200) est formé par une paire de joints toriques (202), et l'ensemble d'étanchéité comprend en outre une bague de support (204) interposée entre la paire de joints toriques (202) dans la rainure s'étendant circonférentiellement (114₁),
dans lequel la rainure s'étendant circonférentiellement (114₁) s'étend sur 360 degrés autour de l'axe du rotor (103), et chacun des joints toriques (202) de la paire de joints toriques (202) et de la bague de support (204) s'étend de manière continue le long de la rainure s'étendant circonférentiellement (114₁).

15. Rotor de compresseur selon la revendication 14, dans lequel chacun des joints toriques (202) de la paire de joints toriques (202) est formé par un élastomère et la bague de support (204) est formée par l'un d'un polymère, d'un métal et d'un alliage métallique.
